# EUROPEAN PATENT SPECIFICATION

(11) **EP 3 296 608 B1**
(45) Date of publication and mention of the grant of the patent: **26.08.2020**
(21) Application number: 17193083.7
(22) Date of filing: 05.06.2014
(51) Int. Cl.: F16L 55/165, F16L 55/18, B29C 63/36, B32B 1/08, B32B 5/02

(54) **PRESSURE INFUSION LINING SYSTEM**
DRUCKINFUSIONSAUSKLEIDUNGSSYSTEM
SYSTÈME DE GARNITURE DE PERFUSION SOUS PRESSION

(30) Priority: 07.06.2013 US 201361832433 P
(43) Date of publication of application: 21.03.2018
(62) Divisional of application: 14807506.2
(73) Proprietor: Warren Environmental & Coating, LLC, Middleborough MA 02346 (US)
(72) Inventor: Warren, Daniel, Carver, MA 02330 (US)
(74) Representative: EIP

(56) References cited:
- EP-A1- 1 676 691
- JP-A- H0 596 621
- US-A- 4 714 095
- US-A- 6 050 300
- US-A1- 2006 254 711
- US-A1- 2010 295 198
- US-A1- 2011 297 243

## Description

### BACKGROUND OF THE INVENTION

The present invention relates generally to a system for repairing a distressed pipeline by installing a liner inside of the pipeline. More specifically, the present invention relates to a process wherein a curable resin system is applied to the inside walls of the pipeline in a two part process where first a resin is spun onto the pipeline wall. Next, a dry liner is inverted into the pipe and slowly pressurized to bed it into the uncured epoxy to wet out the liner until cured.

Throughout developed parts of the world, there are numerous pipeline conduits that run underground in order to provide utility services to businesses and residences. These utilities include water lines, sewer pipes, storm water drains, and the like. Since these pipelines are installed underground, they are constantly subjected to numerous environmental pressured that cause the pipeline to deteriorate. For example, the pipeline may deteriorate due to ordinary aging, corrosive action of the fluids being transported in the line, environmental conditions such as groundwater exposure, or other reasons. Over time, all of the wear factors that impact on the pipeline result in holes, cracks, and other defects in the line that must be repaired in order to prevent fluid leakage problems.

In some instances, the concern is that foreign matter, which is initially part of the actual construction of the pipeline, may begin to flake off of the interior surfaces of the damaged pipeline and enter the fluid flow within the pipeline. For example, ductile iron piping has a clay liner surface that upon failure may allow rust to enter the fluid flow. Similarly, transite pipes, that contain asbestos reinforcing fibers, may release asbestos into the drinking water contained therein as the wall of the pipe begins to deteriorate. Finally, the potential exists for the introduction of substances that flow from the surrounding underground environment into the pipeline or for the water that is being carried through the pipeline conduit to flow outwardly through the cracks leading to a loss of water pressure and other problems.

The traditional approach to repairing the above-identified issues entailed digging up the effected pipeline and replacing it. Given the millions of miles of installed pipeline in the United States alone, this solution would be prohibitively expensive. Further, such pipelines are typically located beneath streets and right of ways where digging would create traffic flow problems and require extensive repaving of roadways as the replacement process was completed. In the case where transite pipelines must be repaired, an additional issue regarding the need to dispose of large quantities of asbestos waste must be addressed.

In an attempt to overcome many of these problems related to the traditional digging methods, a number of methods for renovating existing underground pipelines have been developed. Many of these methods employ the installation of a lining on the interior of the damaged pipeline using a lining hose and a calibration hose. For example, U.S. Patent 4,714,095 (Müller) discloses a method of salvaging an underground sewer pipe with a lining hose and calibrating hose. The lining hose includes an inner layer, which is treated with a first resin, and an outer layer, which is not treated with a resin. The lining hose is placed into the pipe conduit. A surface region of a calibrating hose, which will contact the inner layer of the lining hose, is coated with a second resin. Then, the calibrating hose is introduced into the lining hose. The resins harden so that the lining hose becomes attached to contact surfaces of the calibration hose.

U.S. Patent 4,770,562 (Müller) discloses another method of salvaging an underground pipe conduit. A lining hose having an inner layer that is saturated with a resin is used. The lining hose includes an outer layer, which is perforated to form flow-through openings for the resin of the inner layer. The lining hose is introduced into the pipe conduit. Then, the lining hose is shaped to conform to the pipe by introducing an auxiliary hose into the lining hose and injecting fluid into the auxiliary hose. The resins harden to form a lining structure in the pipeline. After the curing step, the auxiliary hose can be kept in the lining hose or it can be removed using ropes or cables.

U.S. Patent 5,653,555 (Catallo) discloses a method of lining a pipe conduit using multiple curing resins. A lining hose, which is coated with a high-strength resin, is first positioned inside of the conduit. The lining hose is then expanded into contact with the inside surface of the conduit by inverting a calibration hose. The calibration hose has a layer of corrosion-resistant resin. The high-strength and corrosion-resistant resin layers are cured by the application of a heated fluid. The cured lining hose and calibration hose form a rigid self-supporting structure. The calibration hose is not removed from the liner.

U.S. Patent 5,680,885 (Catallo) discloses a method of rehabilitating a damaged pipe conduit using a lining hose and calibration hose. The inner layer of the lining hose is soaked with an excess volume of resin. The calibration hose contains a resin-absorbent layer. The calibration hose is placed in the lining hose and inverted by the application of heated water. After inversion, the resin- absorbent layer of the calibration hose contacts and adheres to the resin-coated layer of the lining hose. Upon curing, the calibration hose becomes an integral part of the liner.

U.S. Patent 5,706,861 (Wood) discloses a method of lining a section of a pipeline by a "cured in place" system using a lining tube and inflatable bladder. The lining tube is impregnated with a curable synthetic resin and carried into the pipe conduit on an annular inflatable bladder. The bladder is inflated and the lining tube is cured to the pipeline. Then, the bladder is peeled away from the cured lining tube and removed from the pipe conduit by ropes.

Although the above-described conventional methods may be somewhat effective in repairing pipelines, they still suffer from various problems. For example, problems arise concerning the inversion of a felt liner because it is relatively delicate and tends to break or rip during the inversion process. Also, pulling prior art liner tubes around corners is very difficult resulting in fractures in the sealing at such joints. Also, the pipeline joints found at corners and periodically along the length of the pipeline forms voids that cannot be completely filled by the prior art methods. Thus, the prior art methods can do nothing to improve the strength of the pipeline at its joints. Another difficulty is that once a liner has been installed, the identification of lateral supply pipe branches are difficult to identify and clear.

US 2010/295198 A1 discloses a system for installing a dry liner in a pipeline.

In view of the foregoing, there is a desire for a structural lining process that effectively seals all of the leaks and cracks within a pipeline. It is also desirable to provide a lining process that preserves structural integrity of the liners throughout the length of the pipeline, including tight bend and turn locations within the pipeline. It is also desirable to improve the adhesion between the lining hose inside of the pipeline and the interior walls of the pipeline to ensure integrity of the liner for a permanent installation that does not need periodic repair.

In this specification the following unit conversion rates will be taken into account:
1 psi = 6895 Pa
1 foot = 0,30 m

### BRIEF SUMMARY OF THE INVENTION

In this regard, the present invention provides a system according to claim 1 for installing a liner in an underground utility structure, such as an underground water pipeline. Installing such a liner enables a damaged pipeline to be repaired and salvaged and placed in a condition for normal use. In accordance with the method of the present invention, the interior surface of the pipeline to be repaired and salvaged is first prepared by removing excess debris and dirt. The preparation is preferably performed with the appropriate surface preparation material based on the pipe material and condition.

Next an epoxy material is applied to the interior surface of the pipe. Preferably, a layer of epoxy is applied to the interior surface of the host pipe to the appropriate thickness using a machine such as a spincast machine that coats the walls of the pipe as it travels there along.

As the spincast machine travels along coating the pipe, the dry liner is inverted into the pipe directly behind the coating. It is important to limit the pressure used of the initial inversion so as not to further damage fragile piping systems. In this manner the dry woven or needle punched liner tube is inverted into the host pipe. The liner tube will go into the host pipe in a dry, not wetted out condition.

To control the inversion process and coordinate with the installation of the spray applied epoxy, the speed of the spin caster is calibrated with the speed of the inversion system in order to feed the dry liner into the epoxy lined host pipe. Further a drag is set on the inversion equipment relative to the speed of the epoxy spinner unit. Once the liner is completely inverted into the pipeline, the internal pressure of the liner is slowly raised to a preferable range of about 8-10 psi. At this pressure, the dry inverted liner will be slowly infused into the uncured epoxy. The internal pressure in the inversion system will support the damaged pipe and force any excess resin through open pipe joints, cracks and bridge areas of the missing host pipe.

Once the process is complete, the inversion liner calibration tube (if employed) will be retrieved out of the system leaving the inversion liner as a stand-alone system. Preliminary testing shows the liner to have a flexural modulus in excess of 1,000,000 psi.

A new pipe within a pipe is thereby created by using potable water approved resins that can be cured under water with strong adhesion properties to wet under water substrates combined with woven structural fabrics such as carbon fiber and S glass structural fiberglass woven together. This process will make the host pipe100 times plus stronger than it was when it was new, and stronger than any new pipe line product other than stainless steel or carbon steel pipe. The infusion liner will completely protect the water flowing within the pipe from free release into the water flow of any asbestos, lead PBCs or PVCs, and any surface ground water pollutants that may have previously entered through open pipe joints, cracks or breaks caused by the Venturi effect of flowing water.

This invention eliminates the need for wet out facilities, over the road transport of materials, and the need for steam or boiler trucks.

Therefore, it is an object of the present invention to provide a new and novel system for lining the interior surface of a pipeline to repair and salvage the pipe so that is can be used normally in a leak-free condition. It is another object of the invention to provide a system for a structural lining process that effectively seals all cracks and faults in an existing pipeline. A further object of the invention is to provide a system for a structural lining process that installs a sealing inner liner that is well suited to seal corner joints within a pipeline. A further object of the present invention is to provide a system for a structural lining process that is relatively inexpensive to carry out compared to prior art processes without sacrificing the integrity of the sealing and repair accomplished by the process of the present invention.

These together with other objects of the invention, along with various features of novelty which characterize the invention, are pointed out with particularity in the claims annexed hereto and forming a part of this disclosure. For a better understanding of the invention, its operating advantages and the specific objects attained by its uses, reference should be had to the accompanying drawings and descriptive matter in which there is illustrated a preferred embodiment of the invention.

### BRIEF DESCRIPTION OF THE DRAWINGS

In the drawings which illustrate the best mode presently contemplated for carrying out the present invention:
FIG. 1 is a schematic diagram of a liner inversion system of the present invention; and
FIG. 2 is a diagram of a lining inverter in accordance with the present invention.

### DETAILED DESCRIPTION OF THE INVENTION

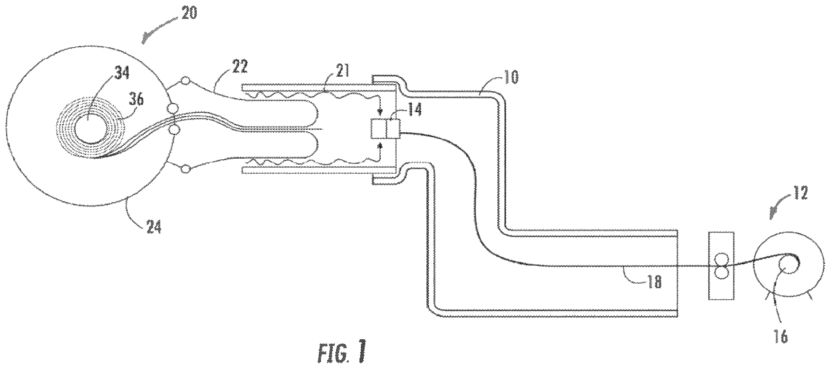

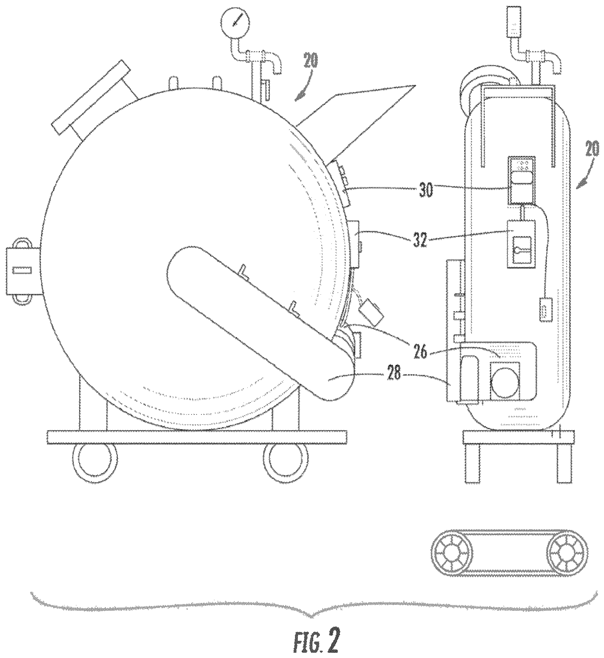

Now referring to the drawings, the inversion lining system of the present invention is schematically depicted and generally illustrated in Figs. 1 and 2. In most general terms a spincast epoxy coating machine 12 is set up at one end of the host pipe 10. The spincaster 14 is pulled through the host pipe 10 via winch 16 and cable 18, or by a rock bore machine. At the other end of the host pipe 10, a computer controlled inversion machine 20 is set up. The interior surface of the host pipe 10 is coated with wet uncured spray applied epoxy 21 at a set speed as the spincaster 14 is retrieved. The inversion machine 20 loaded with dry liner 22 inside the inversion bag 24 is inverted into the host pipe 10 and into the wet epoxy 21. The payout speed of the inversion liner 22 is computer controlled at a constant speed and internal pressure. The dry inversion liner 22 is forced through the wet epoxy at a controlled speed such that the slow rate of inversion prevents air from being trapped behind the inversion liner 22 as it is bedded into the epoxy and prevents twisting or binding when the inversion liner 22 navigates bends and turns in the host pipe 10.

Now discussing the system in detail, the present invention provides a system for installing a liner in an underground utility structure or pipeline, such as an underground water pipeline, drainage line, manhole, storage tank (above or below ground), conduit, culvert or the like. Installing such a liner enables a damaged utility structure to be repaired and salvaged and placed in a condition for normal use. While a variety of structures can be repaired using the method and system of the present invention, the term pipeline will be used as an illustrative example for the remainder of the disclosure. The interior surface of the pipeline to be repaired and salvaged is first prepared by removing excess debris and dirt. The preparation is preferably performed with the appropriate surface preparation material based on the pipe material and condition. The details of the preparation process will not be discussed further herein since such processes are well known in the art.

Next an epoxy material is applied to the interior surface of the pipe. Preferably, a layer of epoxy is applied to the interior surface of the host pipe to the appropriate thickness. The epoxy can be spray, brush or roller applied. More preferably, the epoxy is applied using a machine such as a spincast machine that coats the walls of the pipe as it travels there along. The spincast machine has been described in detail in a co-pending application by the present inventor. The spincast machine has a rotary spray head that applies epoxy over the interior surface of the pipeline as the device is drawn out of the pipe

As the spincast machine travels along coating the pipe, the dry liner is inverted into the pipe directly behind and into the uncured wet epoxy coating. However, in the prior art when inversion is performed, pressure is applied to the liner and the liner spool is allowed to run freely. In this manner the liner quickly fills the interior of the pipe but as it does so it leaves air gaps at imperfections, joints and behind corners. The present invention limits pressure used of the initial inversion so as not to further damage fragile piping systems. In this manner the dry woven or needle punched liner tube is inverted into the host pipe. The liner tube will go into the host pipe in a dry, not wetted out condition.

To control the inversion process and coordinate with the installation of the spray applied epoxy, the speed of the spin caster is calibrated with the speed of the inversion system in order to feed the dry liner into the epoxy lined host pipe. Further a drag is set on the inversion equipment relative to the speed of the epoxy spinner unit. As seen in Fig. 2 the inversion system 20 has a motor 26 that is connected to the drum 34 that carries the liner 36. The motor via direct or indirect drive 28 regulates the speed at which the drum 34 can rotate thereby limiting the speed at which the liner 36 can be inverted into the pipeline. A computer controller 30 regulates the motor thereby controlling and limiting the inversion speed of the liner. It should be appreciated by one skilled in the art that the speed control of the drum may be accomplished by other means for controlling rotational speed such as brakes.

Once the liner is completely inverted into the pipeline, the internal pressure of the liner is slowly raised to a preferable range of about 8-10 psi. At this pressure, the dry inverted liner will be slowly infused into the uncured epoxy. The internal pressure in the inversion system will support the damaged pipe and force any excess resin through open pipe joints, cracks and bridge areas of the missing host pipe. In one example, the spincast line draws the spincast device through the pipeline applying a coating at about 4 linear feet per minute. The speed limited inversion liner is allowed to pay out at an inversion speed of approximately 0.5 feet per minute. The infusion tube will force the dry liner through the wet epoxy at a precise speed, pressure and controlled thickness. The slow rate of inversion will not allow air to be trapped behind the new liner and it will prevent twisting or binding when the new liner navigates bends and turns in the host pipe.

Once the process is complete, the inversion liner calibration tube (if employed) will be retrieved out of the system leaving the inversion liner as a stand-alone system. Preliminary testing shows the liner to have a flexural modulus in excess of 1,000,000 psi.

A new pipe within a pipe is thereby created by using potable water approved resins that can be cured under water with strong adhesion properties to wet under water substrates combined with woven structural fabrics such as carbon fiber and S glass structural fiberglass woven together. This process will make the host pipe 100 times plus stronger than it was when it was new, and stronger than any new pipe line product other than stainless steel or carbon steel pipe. The infusion liner will completely protect the water flowing within the pipe from free release into the water flow of any asbestos, lead PBCs or PVCs, and any surface ground water pollutants that may have previously entered through open pipe joints, cracks or breaks caused by the Venturi effect of flowing water.

This invention eliminates the need for wet out facilities, over the road transport of materials, and the need for steam or boiler trucks.

It can therefore be seen that the present invention provides a new and novel system for lining the interior surface of a pipeline to repair and salvage the pipe so that is can be used normally in a leak-free condition and provides a system for a structural lining process that installs a sealing inner liner that is well suited to seal corner joints within a pipeline. For these reasons, the instant invention is believed to represent a significant advancement in the art, which has substantial commercial merit.

While there is shown and described herein certain specific structure embodying the invention, it will be manifest to those skilled in the art that various modifications and rearrangements of the parts may be made without departing from the scope of the underlying inventive concept and that the same is not limited to the particular forms herein shown and described except insofar as indicated by the scope of the appended claims.

## Claims

1. A system for installing a liner (22,36) in an underground utility structure (10), having an interior surface, comprising:
a drum (34) supporting a length of dry liner (22,36) to be inverted at an internal pressure ; and a controller (30) configured to (i) control the speed that said drum (34) rotates to limit a speed at which said dry liner is installed into said utility structure (10), and to (ii) control the internal pressure ;
wherein said controller is configured to allow said dry liner (22,36) to invert into a utility structure (10) and the controller is configured to limit the inversion rate of the dry liner (22,36) to less than or equal to 0.15m (0.5 feet) per minute.

2. The system of claim 1 further comprising:
a device (14) for applying a coating of resin to an interior of said underground utility structure (10).

3. The system of Claim 1, wherein the dry liner is a nonwoven fibrous material.

4. The system of Claim 2, wherein said resin is an epoxy.

5. The system of Claim 2, wherein said device (14) is a spincast machine (14).

## Patentansprüche

1. System zum Installieren einer Auskleidung (22, 36) in einer unterirdischen Versorgungsstruktur (10), die eine Innenoberfläche aufweist, umfassend:
eine Trommel (34), die eine Länge einer Trockenauskleidung (22, 36) trägt, die bei einem Innendruck umgedreht werden soll; und
eine Steuervorrichtung (30), die konfiguriert ist, um (i) die Geschwindigkeit zu steuern, mit der sich die Trommel (34) dreht, um eine Geschwindigkeit zu begrenzen, mit der die Trockenauskleidung in die Versorgungsstruktur (10) eingebaut wird, und um (ii) den Innendruck zu steuern;
wobei die Steuervorrichtung konfiguriert ist, um es der Trockenauskleidung (22, 36) zu ermöglichen in eine Versorgungsstruktur (10) invertiert zu werden, und die Steuerung konfiguriert ist, um die Inversionsrate der Trockenauskleidung (22, 36) auf weniger als oder gleich 0,15 m (0,5 Fuß) pro Minute zu begrenzen.

2. System nach Anspruch 1, ferner umfassend:
eine Vorrichtung (14) zum Auftragen einer Harzbeschichtung auf ein Inneres der unterirdischen Versorgungsstruktur (10).

3. System nach Anspruch 1, wobei die Trockenauskleidung ein Faservliesmaterial ist.

4. System nach Anspruch 2, wobei das Harz ein Epoxid ist.

5. System nach Anspruch 2, wobei die Vorrichtung (14) eine Schleudergussmaschine (14) ist.

## Revendications

1. Système d'installation d'une chemise (22, 36) dans une structure utilitaire souterraine (10), possédant une surface intérieure, comprenant :
un tambour (34) supportant une longueur de chemise sèche (22, 36) à invertir à une pression interne ; et
un dispositif de régulation (30) configuré pour (i) réguler la vitesse de rotation dudit tambour (34) pour limiter une vitesse à laquelle ladite chemise sèche est installée dans ladite structure utilitaire (10), et pour (ii) réguler la pression interne ;
dans lequel ledit dispositif de régulation est configuré pour permettre à ladite chemise sèche (22, 36) de s'invertir dans une structure utilitaire (10) et le dispositif de régulation est configuré pour limiter la vitesse d'inversion de la chemise sèche (22, 36) à un maximum de 0,15 m (0,5 pied) par minute.

2. Système selon la revendication 1 comprenant en outre :
un dispositif (14) permettant l'application d'un revêtement de résine à un intérieur de ladite structure utilitaire souterraine (10).

3. Système selon la revendication 1, dans lequel la chemise sèche est un matériau fibreux non tissé.

4. Système selon la revendication 2, dans lequel ladite résine est un époxy.

5. Système selon la revendication 2, dans lequel ledit dispositif (14) est une machine de moulage par centrifugation (14).
